# FASCICULE DE BREVET EUROPEEN

(11) **EP 2 984 697 B1**
(45) Date de publication et mention de la délivrance du brevet: **26.07.2017**
(21) Numéro de dépôt: 14721526.3
(22) Date de dépôt: 09.04.2014
(51) Int. Cl.: H01M 10/0587, H01M 10/052, H01M 10/613, H01M 10/6562, H01M 10/04, H01M 10/654, H01M 10/643

(54) **ACCUMULATEUR ÉLECTROCHIMIQUE AU LITHIUM AVEC BOITIER À DISSIPATION THERMIQUE AMÉLIORÉE, PACK-BATTERIE ET PROCÉDÉS DE RÉALISATION ASSOCIÉS**
ELEKTROCHEMISCHE LITHIUMSPEICHERBATTERIE MIT EINEM GEHÄUSE MIT VERBESSERTER WÄRMEABLEITUNG, BATTERIEPACK UND ZUGEHÖRIGES HERSTELLUNGSVERFAHREN
LITHIUM ELECTROCHEMICAL STORAGE BATTERY HAVING A CASING PROVIDING IMPROVED THERMAL DISSIPATION, ASSOCIATED BATTERY PACK AND PRODUCTION PROCESSES

(30) Priorité: 09.04.2013 FR 1353163
(43) Date de publication de la demande: 17.02.2016
(73) Titulaire: Commissariat à l'Énergie Atomique et aux Énergies Alternatives, 75015 Paris (FR)
(72) Inventeur: CHAMI, Marianne, F-38600 Fontaine (FR); JOST, Pierre, F-38220 Saint-Pierre de Mésage (FR)
(74) Mandataire: Nony
(86) Numéro de dépôt international: PCT/IB2014/060548
(87) Numéro de publication internationale: WO 2014/167504

(56) Documents cités:
- EP-A1- 0 887 876
- EP-A1- 2 105 986
- EP-A2- 1 321 989
- WO-A1-2012/115131
- DE-A1-102011 010 664
- FR-A1- 2 770 032
- US-A- 3 490 949
- US-A- 5 571 632
- US-A1- 2012 114 995

## Description

### Domaine technique

La présente invention concerne le domaine des générateurs électrochimiques au lithium, qui fonctionnent selon le principe d'insertion ou de désinsertion, ou autrement dit intercalation- désintercalation, de lithium dans au moins une électrode.

Elle concerne plus particulièrement un accumulateur électrochimique au lithium comportant au moins une cellule électrochimique constituée d'au moins une anode et une cathode de part et d'autre d'un électrolyte, deux collecteurs de courant dont un est relié à l'anode et l'autre à la cathode, et un boitier de forme allongée selon un axe longitudinal (X), le boitier comportant un couvercle, un fond et une enveloppe latérale assemblée à la fois au fond et au couvercle, le boitier étant agencé pour contenir la(les) cellule(s) électrochimique avec étanchéité tout en étant traversé par une partie des collecteurs de courant formant les pôles.

L'invention vise à proposer une solution qui permette de s'affranchir des conséquences néfastes des échauffements de la (des) cellule(s) électrochimique(s) en fonctionnement, notamment en fonctionnement anormal de l'accumulateur.

Par « fonctionnement anormal », on entend ici et dans le cadre de l'invention un fonctionnement d'un accumulateur au lithium qui se produit lors de la création d'une surcharge accidentelle, d'un court-circuit électrique au sein de la (des) cellule(s) électrochimique(s) et qui engendrant une surélévation de la température par rapport à la température maximale de fonctionnement dans les conditions nominales.

L'invention peut s'appliquer aussi bien à une architecture de batteries lithium-ion conventionnelle que l'on peut qualifier de monopolaire, car avec une seule cellule électrochimique comportant une anode, une cathode et un électrolyte qu'à une architecture de batteries Lithium bipolaire, comprenant au moins un collecteur de courant à fonction bipolaire, aussi appelée batterie bipolaire.

Dans une telle batterie bipolaire, le collecteur bipolaire supporte sur chacune de ses faces opposées un des deux matériaux d'électrode à signe opposé, c'est-à-dire avec une cathode (électrode positive) supportée par l'une des faces et une anode (électrode négative) supportée par l'autre des faces opposées.

### Etat de la technique

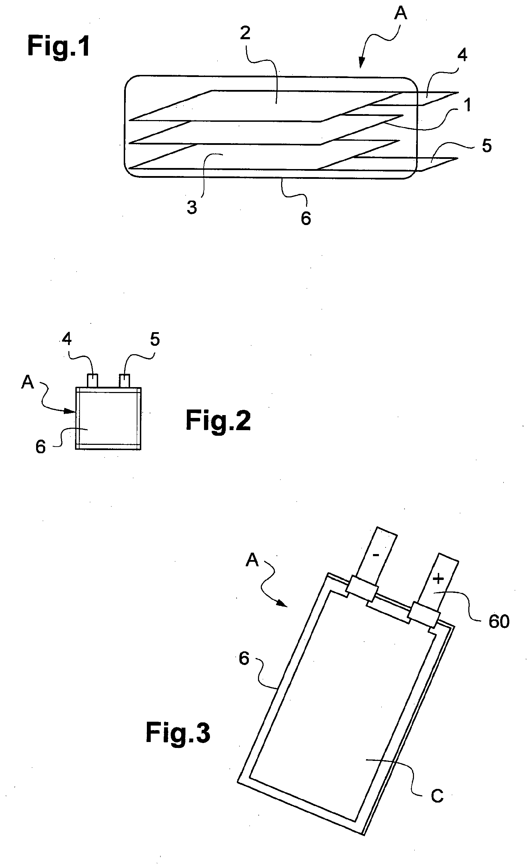

Telle qu'illustrée schématiquement en figures 1 et 2, une batterie ou accumulateur lithium-ion A comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄, LiCoO₂, LiNi_{0.33}Mn_{0.33}CO_{0.33}O₂.

L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouche constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité se détériore fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁹ mbar.l/s, ou dans des milieux à fortes contraintes comme le domaine aéronautique ou spatial.

Aussi, à ce jour un emballage rigide utilisé est constitué d'un boitier métallique, généralement en un métal léger et peu coûteux, typiquement en acier inoxydable (inox 316L ou inox 304) ou en aluminium (Al 1050 ou Al 3003), ou encore en titane. En outre, l'aluminium est généralement préféré pour son coefficient de conductivité thermique élevé comme expliqué ci-après. Des boitiers réalisés en acier recouvert d'un revêtement bimétal en cuivre/nickel ont déjà été envisagés dans la demande de brevet WO2010/113502.

Des boitiers en matière plastique, en particulier intégralement en polymère ont également déjà été envisagés, en particulier dans la demande de brevet US 2010316094. Bien que présentant une tenue mécanique importante, ces boitiers n'ont que peu de chances d'être viable économiquement en raison du prix de leur matériau constitutif.

Des boitiers en matériau mixte polymère/fibres ont été également envisagés.

On peut citer enfin des boitiers intégrés dans des supports qui permettent aux accumulateurs Li-ion d'être rechargés par un panneau solaire, tel qu'un boitier intégré dans une casquette comme décrit dans la demande de brevet CN 201690389 U.

L'avantage principal des emballages rigides est leur étanchéité élevée et maintenue au cours du temps du fait que la fermeture des boitiers est réalisée par soudure, en générale par soudure au laser. L'inconvénient majeur de ces emballages rigides est leur poids élevé du fait du métal utilisé pour le boitier.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique. Des formes prismatiques de boitiers ont également déjà été réalisées.

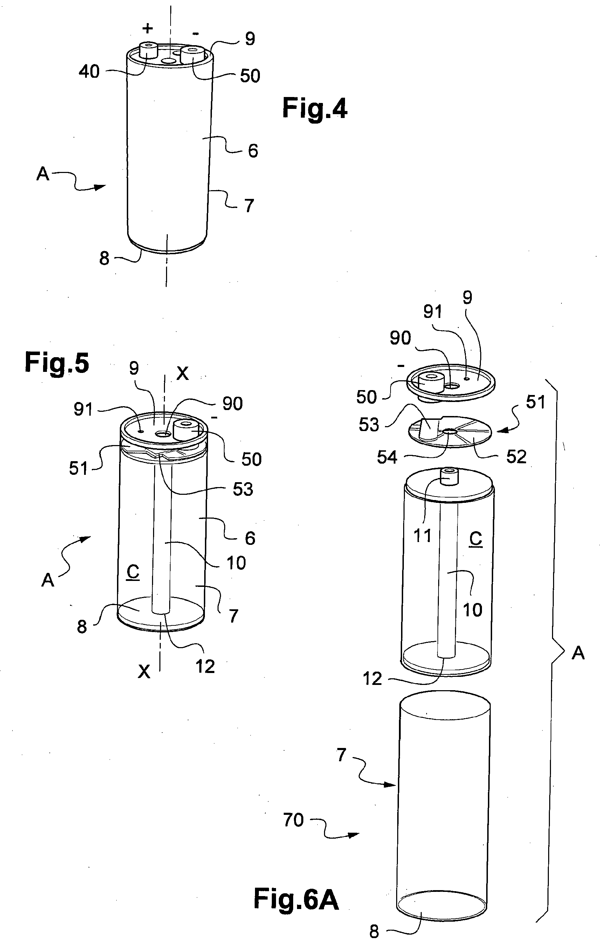

Un des types de boitier rigide de forme cylindrique, usuellement fabriqué pour un accumulateur Li-ion de forte capacité et à durée de vie supérieure à 10 ans, est illustré en figure 4.

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 40, 50. Une des bornes de sortie (pôles), par exemple la borne positive 40 est soudée sur le couvercle 9 tandis que l'autre borne de sortie, par exemple la borne négative 50, passe à travers le couvercle 9 avec interposition d'un joint non représenté qui isole électriquement la borne négative 50 du couvercle.

Quel que soit le type d'emballage souple ou rigide par boitier envisagé à ce jour, la ou les cellules électrochimiques est (sont) de fait contenue(s) dans une enceinte complètement étanche vis-à-vis de l'extérieur.

Or, lorsque l'accumulateur au lithium fonctionne, i.e. la cellule électrochimique est sous tension électrique, il se produit au sein de cette dernière des échauffements. Ceux-ci sont dus de manière minoritaire aux passages des courants vers les connecteurs de courant et principalement aux réactions électrochimiques au sein de chaque cellule.

La dissipation thermique de ces échauffements s'effectue naturellement par les parois externes de la cellule électrochimique, i.e. celles en contact avec l'emballage.

Pour cette raison, les concepteurs d'accumulateurs au lithium, en particulier Li-ion, envisagent systématiquement :
- soit des boitiers d'accumulateurs de forme cylindrique de faible diamètre avec un rapport entre hauteur et de diamètre supérieur à 1 ;
- soit des boitiers d'accumulateurs de forme prismatique avec une plus grande surface de paroi comparativement à ceux de forme cylindrique et toujours avec un rapport entre hauteur et épaisseur supérieur à 1. Des accumulateurs de forme prismatique ont de fait une densité d'énergie supérieure à celle des accumulateurs de forme cylindrique.

Lors de conditions anormales de fonctionnement, i.e. hors des conditions nominales, comme par exemple une surcharge accidentelle, un court-circuit générant une température supérieure à la température maximale de fonctionnement, crée un risque d'explosion de l'accumulateur. En effet, de telles conditions entraînent un échauffement de l'électrolyte et la formation de vapeurs d'électrolyte. L'accumulation de ces vapeurs dans le boitier entraîne une augmentation de la pression interne de l'accumulateur, qui peut conduire à un éclatement violent du boitier et à la projection de composés chimiques nocifs et corrosifs pour l'environnement et les personnes situées à proximité. Des dispositifs de sécurité, tels que des soupapes existent, qui évitent l'accumulation des gaz et un emballement thermique à l'intérieur du boitier d'un accumulateur étanche et permettent leur évacuation lorsque la pression interne excède une valeur prédéterminée : on pourra se reporter aux solutions décrites dans les brevets US5677076 ; US5741606 et FR2873495B1.

Lors de tels dysfonctionnements de la cellule électrochimique constituant un accumulateur, des échauffements se produisent au coeur de celui-ci et lorsque la dissipation thermique est suffisante, notamment à l'aide des dispositifs de sécurité précités, aucun emballement thermique ne se produit. Dans le cas contraire, l'emballement thermique peut aller jusqu'à causer une explosion de l'accumulateur.

Des échauffements en fonctionnement anormal d'un accumulateur peuvent conduire à des températures comprises entre 100 et 150°C avec une cinétique très rapide au coeur de l'accumulateur. Il a pu être constaté que ces températures étaient si élevées que le noyau central, classiquement réalisé en polymère (en polyoléfine ou en polyoléfine chargé), autour duquel est enroulée par bobinage la cellule était en fusion. Cette fusion du noyau central en polymère provoque une obstruction du passage des gaz au centre de l'accumulateur avec comme conséquence un emballement thermique non maîtrisé même par les dispositifs de sécurité évoqués ci-dessus. Cela peut conduire à une explosion avec flamme de l'accumulateur. La fusion du noyau central en polymère provoque en outre des produits de dégradation organiques polluants voire toxiques qui peuvent être s'échapper à l'extérieur du boitier.

Le brevet FR 2873495 B1 décrit un axe central en aluminium, à la résistance thermique augmentée du fait du point de fusion supérieur de l'aluminium, typiquement de l'ordre de 650°C. Cela étant, tant que le dispositif de sécurité agissant comme court-circuit prévu dans ce brevet FR 2873495B1 n'est pas actionné, il n'y a pas réellement de dissipation thermique au coeur de l'accumulateur du fait que l'enceinte formée par le boitier reste complétement étanche vis-à-vis de l'extérieur. En outre, une fois le dispositif de sécurité actionné par rupture d'une partie amincie du fond du boitier, l'accumulateur ne peut plus fonctionner à nouveau.
La demande de brevet EP08887876 A1 divulgue un accumulateur selon le préambule de la revendication 1.

Il existe donc un besoin pour améliorer la dissipation thermique au coeur d'un accumulateur au lithium à emballage rigide constitué par un boitier, en particulier en fonctionnement anormal de la (des) cellule(s) électrochimique(s) de l'accumulateur, et notamment en vue de s'affranchir des conséquences néfastes liées aux échauffements trop importants au coeur de l'accumulateur.

Il existe un besoin particulier d'amélioration de la dissipation thermique au coeur d'un accumulateur au lithium sans que cela conduise à une inutilisation impérative de ce dernier en cas de fonctionnement anormal de la (des) cellule(s) électrochimique(s) en son sein.

Le but de l'invention est de répondre au moins en partie à ce(s) besoin(s).

### Exposé de l'invention

Pour ce faire, l'invention a pour objet, sous un de ses aspects un accumulateur électrochimique au lithium comportant au moins une cellule électrochimique constituée d'au moins une anode et une cathode de part et d'autre d'un électrolyte imprégné dans un séparateur, deux collecteurs de courant dont un est relié à l'anode et l'autre à la cathode, un boitier de forme allongée selon un axe longitudinal (X), le boitier comportant un couvercle, un fond, une enveloppe latérale assemblée à la fois au fond et au couvercle, et, un noyau central selon l'axe X, le noyau central étant creux au moins sur une partie de sa hauteur et réalisé en un matériau dont le point de fusion est supérieur à la température atteinte par la(les) cellule(s) en fonctionnement anormal, le boitier étant agencé pour contenir la(les) cellule(s) électrochimique(s) enroulée(s) autour du noyau central avec étanchéité tout en étant traversé par une partie des collecteurs de courant formant les pôles, la partie creuse du noyau central débouchant à l'extérieur du boitier par le fond et/ou le couvercle, le noyau central présentant à au moins une extrémité de sa partie creuse un filetage interne.

Selon l'invention, et un filetage externe d'une pièce formant un pôle de l'accumulateur est vissé dans le filetage interne du noyau central. On évite ainsi une étape de fixation usuelle, notamment par soudure d'un pôle sur le couvercle d'un boitier puisque le pôle est directement vissé sur le
noyau central creux selon l'invention. Le filetage interne peut être avantageusement débouchant sur le fond ou sur le couvercle du boitier.

De préférence, la partie creuse communique avec l'extérieur du boitier par ses deux extrémités, c'est-à-dire par le fond et le couvercle.

Par « matériau dont le point de fusion est supérieur à la température atteinte par la(les) cellule(s) en fonctionnement anormal », on entend ici et dans le cadre de l'invention, un matériau apte à supporter les températures atteintes très rapidement et constatées en fonctionnement anormal d'un accumulateur au lithium, généralement au-dessus de 100°C, typiquement entre 100°C et 150°C.

De préférence, le noyau central est creux sur toute sa hauteur.

Selon une variante de réalisation le boitier et le noyau central sont de forme générale cylindrique. De préférence, le diamètre du noyau central est compris entre 0,5 et 5 cm, de préférence encore entre 1 et 2 cm, tandis que le diamètre du boitier est de préférence compris entre 6 et 20 cm, de préférence encore égal à 10 ± 2 cm.

De manière alternative, selon une autre variante, le boitier et le noyau central sont de forme générale prismatique.

De préférence, le boitier est en matériau métallique, tel que l'aluminium.

Le boitier peut être également au moins en partie en polymère. Ainsi, le boitier peut être complétement en polymère

Le noyau central est de préférence en matériau métallique, tel que l'aluminium. Il peut s'agir avantageusement de l'aluminium 1050 dont le point de fusion de l'ordre de 650°C est très largement supérieure aux températures en fonctionnement anormal au coeur de l'accumulateur, i.e. entre 100 et 150°C.

Selon une variante de réalisation avantageuse, le noyau central métallique est revêtu d'un revêtement en matériau isolant électrique, tel qu'un revêtement en polyoléfine. Ainsi, on évite des éventuels courts-circuits pouvant se produire au sein de la cellule électrochimique. Cela peut être le cas lorsque par exemple on réalise manuellement le bobinage de la cellule sur le noyau : des défauts d'alignement peuvent alors être générés avec le risque par exemple de la mise en contact électrique de l'électrode négative avec le métal du noyau. Autrement dit, avec le revêtement isolant électrique sur la surface externe du noyau, on évite à coup sûr les risques de court-circuit qui résulteraient de défauts d'alignement entre électrodes et noyau central lors du bobinage manuel.

De préférence, le noyau central présente une surface externe lisse. Le noyau central creux épouse ainsi au mieux la forme de la cellule lors de l'enroulement.

Selon une variante de réalisation avantageuse, le noyau central présente à au moins une extrémité de sa partie creuse une forme interne adaptée pour réaliser un ajustement serré avec le mandrin d'une machine à bobiner la(les) cellule(s) électrochimique(s). Autrement dit, selon cette variante le noyau creux selon l'invention sert de noyau d'enroulement fixé de manière fiable au mandrin d'une machine d'enroulement (bobineuse).

Selon un mode de réalisation avantageux, le noyau central présente à l'une de ses extrémités la forme interne adaptée pour l'ajustement serré et à l'autre de ses extrémités le filetage interne pour le vissage du pôle de l'accumulateur.

Selon une variante de réalisation, on peut prévoir un ou plusieurs éléments de refroidissement passif, tel(s) qu'une ou plusieurs ailettes, à l'intérieur de la partie creuse du noyau central. Quelle que soit la variante évoquée ci-dessus (formes permettant un emmanchement sur mandrin, filetage interne, ailettes de refroidissement supplémentaire), augmenter la surface interne au creux du noyau central est avantageux car cela revient à augmenter la dissipation thermique par échanges thermiques avec l'air provenant de l'extérieur du boitier.

Selon un développement de l'invention, le(s) élément(s) de refroidissement passif(s) est (sont) agencé(s) de manière à être en contact avec la partie interne du tube formant le noyau central. Il peut s'agir d'un insert ou bien d'ailettes, typiquement en métal conducteur thermique, comme l'inox, le cuivre ou l'aluminium. Avantageusement, l'élément de refroidissement passif sera soudé sur le boitier, ou bien brasé, ou bien encore emmanché en force dans le noyau central en prenant appui sur les parois internes du tube creux formant noyau central.

Selon une variante de réalisation, le noyau central peut être soudé autour d'une ouverture débouchante du fond et/ou du couvercle.

De manière alternative, selon une autre variante, le noyau central et le fond du boitier peuvent constituer une seule pièce emboutie.

L'accumulateur au lithium selon l'invention peut comporter une partie d'un dispositif de sécurité, telle qu'une soupape, intégrée au couvercle et adaptée pour évacuer vers l'extérieur les gaz présents à l'intérieur du boitier en cas de pression supérieure à une valeur seuil prédéterminée. Cela est avantageux en particulier pour des cellules enroulées avec un grand diamètre (forte épaisseur). Avantageusement, le centre de la partie du dispositif de sécurité en contact avec l'extérieur étant agencé à mi-distance entre le bord du couvercle et le centre du noyau central.

Ainsi, un accumulateur Li-ion selon l'invention se caractérise par un noyau central creux qui introduit une lame d'air permanente provenant de l'extérieur au sein de la cellule électrochimique.

Grâce à l'invention, la dissipation thermique permanente d'un accumulateur au lithium est non seulement réalisée par les parois du boitier comme selon l'état de l'art mais également par la lame d'air au centre de l'accumulateur et éventuellement, le(s) élément(s) de refroidissement passif(s) introduit(s) sur le passage de la lame d'air.

Autrement dit, comparativement à un accumulateur au lithium selon l'état de l'art, un accumulateur selon l'invention a une dissipation thermique en permanence en son sein par de l'air provenant de l'extérieur. Lorsque le noyau creux débouche de part en part l'accumulateur, i.e. du fond vers le couvercle, une circulation de l'air par convection naturelle est avantageusement introduite.

L'invention concerne, sous un autre de ses aspects, une batterie, dit pack-batterie, comportant une pluralité d'accumulateurs qui viennent d'être décrits, une boite métallique contenant la pluralité d'accumulateurs reliés en série ou en parallèle électrique entre eux, deux pôles dont le pôle négatif commun aux accumulateurs formant une traversée d'une paroi de la boite et le pôle positif commun aux accumulateurs fixé à une paroi de la boîte, et un film en matériau isolant électrique entre au moins une extrémité des accumulateurs et une paroi de la boîte.

Selon un mode de réalisation, la pluralité d'accumulateurs est agencée à la verticale dans la boite métallique, le pôle négatif commun formant la traversée à travers la paroi inférieure ou supérieure tandis que le pôle positif commun est fixé, notamment par soudure, à la paroi opposé, i.e. respectivement celle supérieure ou inférieure.

L'invention concerne, sous encore un autre de ses aspects, un procédé de réalisation d'un accumulateur au lithium comportant au moins une cellule électrochimique constituée d'au moins une anode et une cathode de part et d'autre d'un électrolyte imprégné dans un séparateur, et un boitier agencé pour contenir la(les) cellule(s) électrochimique(s) avec étanchéité tout en étant traversé par une partie des collecteurs de courant formant les pôles, comportant les étapes consistant à:
a/ enrouler par bobinage l'anode, la cathode et le séparateur de la (des) cellule(s) électrochimique(s) autour d'un noyau central creux sur au moins partie de sa hauteur; le noyau présentant à au moins une extrémité de sa partie creuse un filetage interne et réalisé en un matériau dont le point de fusion est supérieur à la température atteinte par la(les) cellule(s) en fonctionnement anormal ;
b/ souder à l'une des extrémités de la cellule enroulée, la partie de collecteur de courant supportant l'anode avec une partie de collecteur de courant terminal sous la forme d'un clinquant,
c/ introduire la cellule enroulée avec le clinquant dans un récipient rigide formant le fond et l'enveloppe latérale d'un boitier,
d/ souder à l'autre des extrémités de la cellule enroulée, la partie de collecteur de courant supportant la cathode avec le fond du boitier ;
e/ souder le clinquant à un pôle négatif formant une traversée d'un couvercle ;
f/ souder le couvercle au récipient rigide ;
g/ souder le noyau central creux autour d'une ouverture du fond et/ou du couvercle dans laquelle il est emmanché ;
h/ visser le pôle positif dans le filetage interne du noyau central creux.

Selon cette alternative du procédé de réalisation, le fond et l'enveloppe latérale forment une seule et même pièce creuse ou godet.

L'invention concerne, sous encore un autre de ses aspects, un procédé de réalisation d'un accumulateur au lithium comportant au moins une cellule électrochimique (1) constituée d'au moins une anode et une cathode de part et d'autre d'un électrolyte imprégné dans un séparateur, et un boitier agencé pour contenir la(les) cellule(s) électrochimique(s) avec étanchéité tout en étant traversé par une partie des collecteurs de courant formant les pôles, comportant les étapes consistant à:
a1/ enrouler par bobinage l'anode, la cathode et le séparateur de la (des) cellule(s) électrochimique(s) autour d'un élément comportant un noyau central creux sur au moins partie de sa hauteur et une plaque formant le fond d'un boitier; le noyau présentant à au moins une extrémité de sa partie creuse un filetage interne et réalisé en un matériau dont le point de fusion est supérieur à la température atteinte par la(les) cellule(s) en fonctionnement anormal ;
b1/ souder à l'une des extrémités de la cellule enroulée, la partie de collecteur de courant supportant l'anode avec une partie de collecteur de courant terminal sous la forme d'un clinquant,
c1/ souder à l'autre des extrémités de la cellule enroulée, la partie de collecteur de courant supportant la cathode avec le fond du boitier
d1/ introduire la cellule enroulée avec le clinquant dans un récipient rigide formant l'enveloppe latérale du boitier,
e1/ souder le fond à l'enveloppe latérale ;
f1/ souder le clinquant à un pôle négatif formant une traversée d'un couvercle ;
g1/ souder le couvercle au récipient rigide ;
h1/ le cas échéant souder le noyau central creux autour d'une ouverture du couvercle dans laquelle il est emmanché ;
i1/ visser le pôle positif dans le filetage interne du noyau central creux.

Une fois l'étape f/ ou g1/ réalisée, on introduit l'électrolyte liquide à travers une ouverture de remplissage réalisée dans le couvercle afin d'imprégner le(les) séparateur(s) de la(des) cellule(s)

En fonction du type de matériaux d'électrode d'insertion au lithium choisi pour les électrodes constitutives d'une cellule électrochimique selon l'invention, le collecteur de courant formé par au moins une feuille métallique peut être en aluminium ou métallisée en surface d'un autre métal, par exemple en aluminium superposé à du cuivre.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi : oxyde de titane lithié ou non, par exemple Li₄Ti₅O₁₂ ou TiO₂. Plus particulièrement, le matériau d'électrode négative peut être choisi parmi les matériaux carbonés, les oxydes de titane non lithiès et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li₍₄₋ₓ₁₎MₓₗTi₅O₁₂ et Li₄Ti_{(5-y1)}N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti_{(5-y1)}N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en Li4Ti5O12 et les cathodes en LiFePO4.

Par « séparateur », on entend ici et dans le cadre de l'invention, un isolant électrique, conducteur ionique formé par au moins un matériau polymère tel que le polyfluorure de vinylidène (PVDF), le polyacétate de vinyle (PVA), le polyméthacrylate de méthyle (PMMA), le polyoxyéthylène (POE), le polyéthylène téréphtalate (PET), un polymère choisi parmi les polyoléfines tels le polypropylène, le polyéthylène, la cellulose.

L'électrolyte selon l'invention, peut être un liquide formé par un mélange de carbonate et au moins un sel de lithium. Par « sel de Lithium », on entend de préférence, un sel choisi parmi LiPF6, LiClO4, LiBF4 et LiAsF6.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

Le dépôt de chaque électrode sur la portion conductrice électrique formant un collecteur de courant d'au moins un des dispositifs peut être réalisé par une technique d'impression usuelle telle que sérigraphie, héliographie, flexographie, spray,....

Par « traversée », on précise qu'on entend le sens usuel, c'est-à-dire un dispositif servant à faire passer un élément conducteur électrique à travers une paroi et en isolant le conducteur de cette paroi.

### Description détaillée

D'autres avantages et caractéristiques ressortiront mieux à la lecture de la description détaillée, faite à titre illustratif en référence aux figures suivantes parmi lesquelles :
- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective et par transparence d'un accumulateur lithium-ion avec son emballage souple selon l'état de l'art ;
- la figure 4 est une vue en perspective d'un accumulateur lithium-ion selon l'état de l'art avec son emballage rigide constitué d'un boitier ;
- la figure 5 est une vue en perspective d'un accumulateur lithium-ion selon l'état de l'art avec son emballage rigide constitué d'un boitier;
- la figure 6A est une vue en perspective éclatée montrant les différents éléments d'un accumulateur lithium-ion selon un premier mode de réalisation de l'invention ;
- la figure 6B est une vue en perspective éclatée montrant les différents éléments d'un accumulateur lithium-ion selon un deuxième mode de réalisation de l'invention;
- les figures 7 à 9 sont des vues en perspective d'un noyau central creux de forme cylindrique selon respectivement une première, deuxième et troisième variantes de réalisation de l'invention ;
- la figure 10 est une vue en perspective d'un noyau central creux de forme prismatique selon une autre variante de réalisation de l'invention ;
- les figures 11A à 11F sont des vues en perspective illustrant les différentes étapes d'un procédé de réalisation d'un accumulateur lithium-ion selon un mode de l'invention ;
- la figure 12 est une vue en perspective d'une batterie, dit pack-batterie comportant une pluralité d'accumulateurs lithium-ion selon l'invention et une boite métallique contenant la pluralité d'accumulateurs lithium-ion.
- la figure 13 est une vue en perspective éclatée d'un accumulateur lithium ion selon l'invention ;
- la figure 14 est une vue en coupe longitudinale du noyau central de forme intérieure prismatique d'un accumulateur lithium-ion selon l'invention,
- la figure 15A est une vue en perspective d'un accumulateur lithium-ion selon l'invention,
- la figure 15B est une vue en coupe longitudinale d'un accumulateur lithium-ion selon l'invention,
- la figure 16 est une vue rapprochée du dessous d'un accumulateur lithium ion selon l'invention.

Par souci de clarté, les mêmes références désignant les mêmes éléments d'un accumulateur au lithium-ion selon l'état de l'art et selon l'invention sont utilisées pour toutes les figures 1 à 12.

On précise que les différents éléments en selon l'invention sont représentés uniquement par souci de clarté et qu'ils ne sont pas à l'échelle.

On précise enfin qu'ici et dans l'ensemble de la présente demande, les termes « inférieur », « supérieur », « vertical », « remontée », « descente », « dessous » et « dessus » sont à comprendre par référence à un accumulateur au lithium agencé en position verticale avec son couvercle sur l'extrémité du dessus du boitier.

Les figures 1 à 4 ont déjà été commentées en détail en préambule. Elles ne sont donc pas décrites ci-après.

On a représenté un accumulateur A lithium-ion selon l'invention en figure 5.

L'accumulateur A comporte tout d'abord au moins une cellule électrochimique C constituée d'au moins une anode et une cathode de part et d'autre d'un électrolyte imprégné dans un séparateur. L'anode et la cathode en matériau d'insertion au Lithium et peuvent être déposées selon une technique usuelle sous la forme d'une couche active sur une feuille métallique constituant un collecteur de courant. A titre d'exemple, l'anode est en Li4Ti5O12, la cathode en LiFePO4 et les feuilles de collecteurs de courant en aluminium.

L'accumulateur Li-ion comporte deux collecteurs de courant dont un est relié à l'anode et l'autre à la cathode de chaque cellule C.

L'accumulateur comporte également un boitier étanche 6, en tant qu'emballage rigide, le boitier étant de forme allongée selon un axe longitudinal (X).

Le boitier 6 comporte une enveloppe latérale cylindrique 7, un fond 8 à une extrémité, un couvercle 9 à l'autre extrémité, le fond 8 et le couvercle 9 étant assemblés à l'enveloppe 7 par soudure.

Le couvercle 9 supporte les pôles ou bornes de sortie du courant 50. Le pôle positif non représenté est soudé sur le couvercle 9 tandis que le pôle négatif 50, passe à travers le couvercle 9 avec interposition d'un joint non représenté en formant une traversée qui isole électriquement le pôle 50 du couvercle 9.

Tel qu'illustré en figure 5, un clinquant 51 sous la forme d'un disque plein 52 percé en son centre et d'une languette 53 repliée sur elle-même et logé entre l'extrémité supérieure de la cellule C à laquelle il est soudé et le couvercle 9. Le clinquant 51 constitue une partie du collecteur de courant terminal assurant la continuité entre le collecteur de courant supportant l'anode de la cellule, aussi appelé rive négative, et le pôle négatif 50.

L'extrémité inférieure de la cellule C est quant à elle soudée au fond 8 du boitier 6.

Afin d'améliorer la dissipation thermique au coeur de la cellule électrochimique C en fonctionnement de l'accumulateur, notamment en fonctionnement anormal, les inventeurs ont pensé à introduire une lame d'air permanente au sein de la cellule C, l'air provenant de l'extérieur du boitier 8. Cette lame d'air permanent en contact avec l'extérieur assure une dissipation thermique permanente du centre ou autrement dit du coeur de la cellule C enroulée.

Les inventeurs ont ainsi envisagé une solution simple à mettre en oeuvre, à savoir prévoir un cylindre formant un noyau central creux 10 selon l'axe X autour duquel est enroulée la cellule électrochimique C, en un matériau dont le point de fusion est supérieur à la température atteinte par la cellule en fonctionnement anormal, et avec sa partie creuse 11, 12 qui débouche à l'extérieur du boitier par le fond 8 et/ou le couvercle 9.

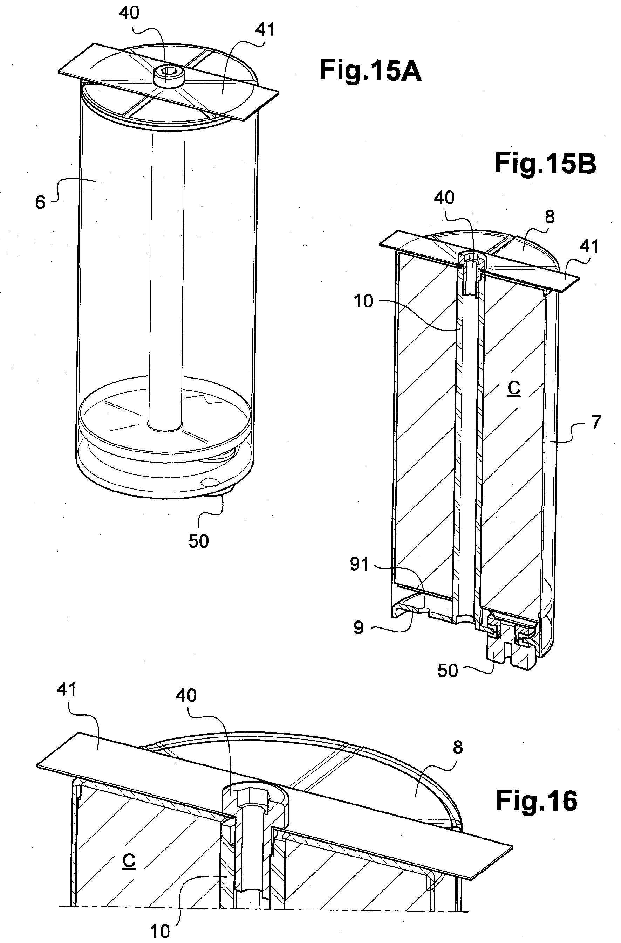

Tel qu'illustré sur l'ensemble des figures 5 à 16, le noyau central 10 est creux sur toute sa hauteur et ses deux extrémités creuses 11, 12 débouchent à travers respectivement le couvercle 9 et le fond 8 vers l'extérieur du boitier 6. On peut ainsi obtenir une circulation permanente par convection naturelle d'air à l'intérieur du noyau 10, ce qui augmente encore la dissipation thermique au coeur de la cellule enroulée. Toutefois, le noyau central 10 peut être creux sur une partie seulement de sa hauteur et alors seule une de ses extrémités 11 ou 12 est creuse et débouche à l'extérieur du boitier 6.

Tel qu'illustré sur l'ensemble des figures 5 à 16, le noyau central creux 10 présente de préférence une surface externe qui est lisse afin d'épouser au mieux la forme de la cellule C lors de son enroulement, et un filetage interne 14 à l'une de ses extrémités afin de pouvoir recevoir le filetage externe (non représenté) de la borne de sortie (pôle) de l'accumulateur 40.

Le noyau central creux 10 est avantageusement en métal et avantageusement encore en aluminium dont le point de fusion aux alentours de 650°C est bien supérieur aux températures atteintes lors d'un fonctionnement anormal de l'accumulateur typiquement jusqu'à 150°C.

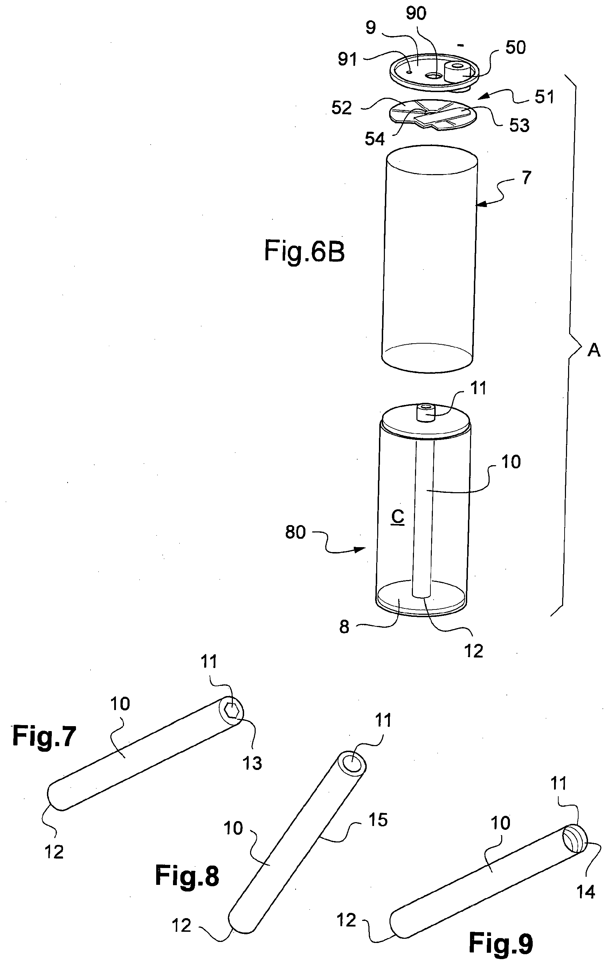

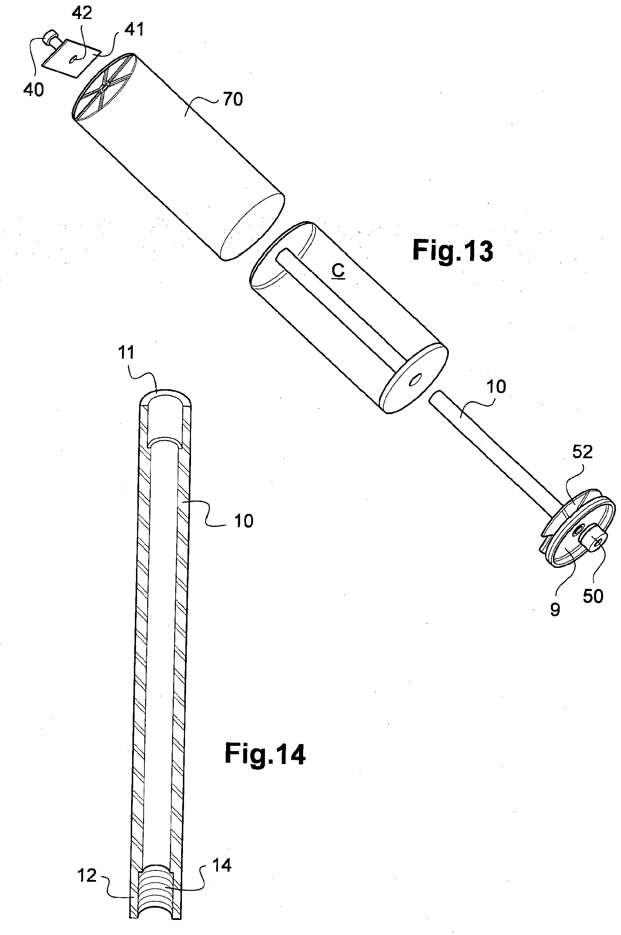

Deux modes de réalisation distincts peuvent être envisagés pour réaliser l'accumulateur Li-ion selon l'invention :
- l'un consiste à enrouler par bobinage la cellule C directement autour du noyau central creux 10 conforme à l'invention puis à loger ce sous-ensemble enroulé dans un récipient rigide 70 intégrant à la fois le fond 8 et l'enveloppe latérale 7 en formant un godet (figure 6A et 13) ;
- l'autre consiste à enrouler par bobinage la cellule C directement autour d'un support 80 intégrant à la fois le noyau central creux 10 conforme à l'invention et le fond 8 puis à loger puis à loger ce sous-ensemble enroulé dans un récipient rigide consistant seulement en une enveloppe latérale 7 (figure 6B).

La forme interne du noyau centrale creux 10 peut être homothétique de celle externe, comme un cylindre creux comme illustré en figure 5. Elle peut également être adaptée pour réaliser un ajustement serré avec le mandrin d'une machine à bobiner la cellule C : cela est montré en figure 7 où l'on peut voir l'intérieur 13 de l'extrémité creuse 11 conformée en polygone régulier, tel qu'un pentagone ou un hexagone, pour être emboitée par compléments de forme sur un mandrin de formes complémentaires. Le noyau central creux 10 constitue alors directement le noyau d'enroulement de la cellule.

La forme interne est avantageusement filetée intérieurement à l'une et/ou l'autre de ses extrémités pour recevoir par vissage un pôle positif 40 de l'accumulateur A : cela est montré en figure 9 et en figures 13, 14, 15A, 15B et 16 où l'on peut voir la borne rapportée par vissage 40 et l'intérieur fileté 14. On veille à ce que l'intérieur de la borne rapportée par vissage 40 soit également creux afin de maintenir la lame d'air depuis l'intérieur du noyau 10 jusqu'à l'extérieur. Un busbar 41, de préférence de fine épaisseur et de forme rectangulaire et comportant un trou 42, est interposé entre le fond 8 et la borne rapportée par vissage 40. Ce busbar est réalisé en matériau conducteur, par exemple du cuivre.

Pour éviter d'éventuels courts-circuits qui pourraient se produire dans la cellule, on peut prévoir avantageusement de revêtir la surface externe du noyau creux métallique avec un revêtement 15 en matériau isolant électrique, tel qu'en polyoléfine (figure 8).

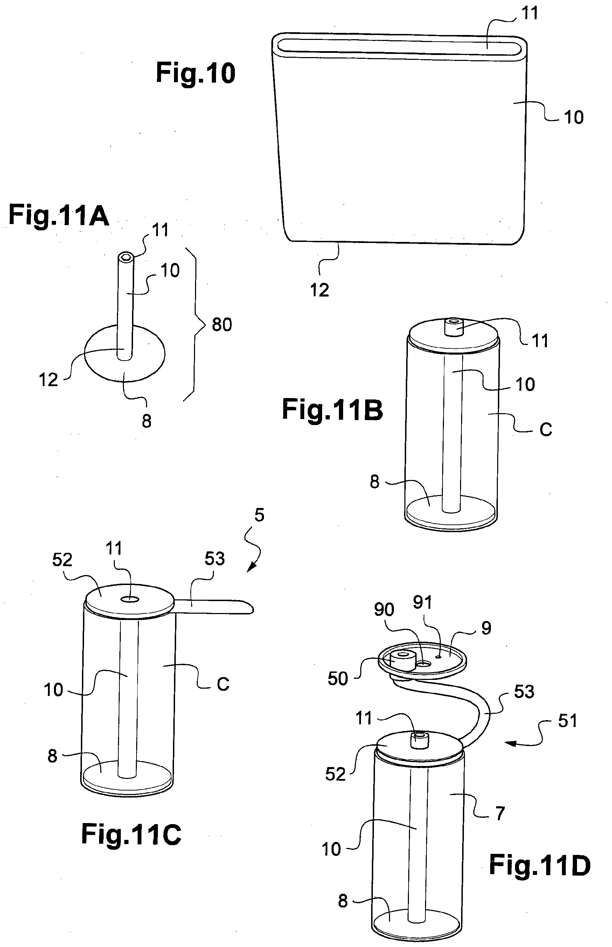

Le boitier 6 et le noyau central creux 10 conforme à l'invention peuvent être de forme cylindrique. Ils peuvent être également de forme prismatique : on prévoit alors un noyau central creux 10 sous la forme d'un prisme creux homothétique de l'enveloppe prismatique 7, comme montré en figure 10.

On décrit maintenant en référence aux figures 11A à 11F les différentes étapes du procédé de réalisation d'un accumulateur Li-ion de forme cylindrique selon le deuxième mode de l'invention illustré en figure 6B.

On réalise au préalable un support 80 comportant un noyau central creux 10 an aluminium sur toute sa hauteur et une plaque 8 en aluminium formant le fond 8 d'un boitier 6 (figure 11A).

Etape a1/ : On enroule par bobinage l'anode, la cathode et le séparateur de la cellule électrochimique C autour du noyau 10 du support 80 (figure 11B). Le support 80 peut être réalise en une seule pièce par emboutissage. Il peut être également réalisé par emboitement du noyau creux par l'une de ses extrémités 11 ou 12 dans une ouverture circulaire centrale d'un disque plein constituant la plaque 8 puis par soudure entre eux autour de l'ouverture circulaire.

Etape b1/: On soude à l'une des extrémités de la cellule enroulée, la partie de collecteur de courant supportant la cathode (rives positives) avec le fond 8 du boitier 6 (figure 11B).

Etape c1/ : On soude alors à l'autre des extrémités de la cellule enroulée, la partie de collecteur de courant supportant l'anode (rives négatives) avec une partie de collecteur de courant terminal sous la forme d'un clinquant 51 (figure 11C). Plus précisément, le clinquant 51 est sous la forme d'un disque plein 52 percé en son centre dans lequel l'extrémité 11 du noyau 10 est emboitée, et d'une languette 53 faisant saillie latéralement du disque 52.

Etape d1/ : On introduit la cellule enroulée avec le clinquant 51 dans un récipient rigide en aluminium formant uniquement l'enveloppe latérale 7 du boitier 6 (figure 11D). On veille en particulier lors de cette étape d1/ à ce que la languette 53 du clinquant 51 ne gêne pas l'introduction. Pour ce faire, on replie celle-ci avantageusement vers le haut.

Etape e1/ : On soude le fond 8 à l'enveloppe latérale cylindrique 7. Pour ce faire, on réalise une soudure circulaire sur le bord circulaire 81 du fond 8 (figure 11D).

Etape f1/ : On soude le clinquant 51 à un pôle négatif 50 formant une traversée d'un couvercle 9 (figure 11D). Ce couvercle 9 comporte une ouverture centrale débouchante 90 adaptée pour loger par emboitement l'extrémité creuse supérieure 11 du noyau central creux 10.

Ce couvercle 9 comporte également une autre ouverture débouchante 91 de moindre diamètre que l'ouverture 90 et décalée latéralement par rapport à l'axe X du noyau. Typiquement, cette autre ouverture débouchante 91 est décalée à mi-distance entre le bord circulaire 92 du couvercle et l'axe X du noyau central 10. Cette autre ouverture débouchante 91 constitue l'ouverture d'évacuation des gaz d'un dispositif de sécurité intégré au boitier 6 d'accumulateur en cas de surpression à l'intérieur. Le dispositif de sécurité peut être un classiquement utilisé pour les batteries Li-ion, aussi appelé « venting ».

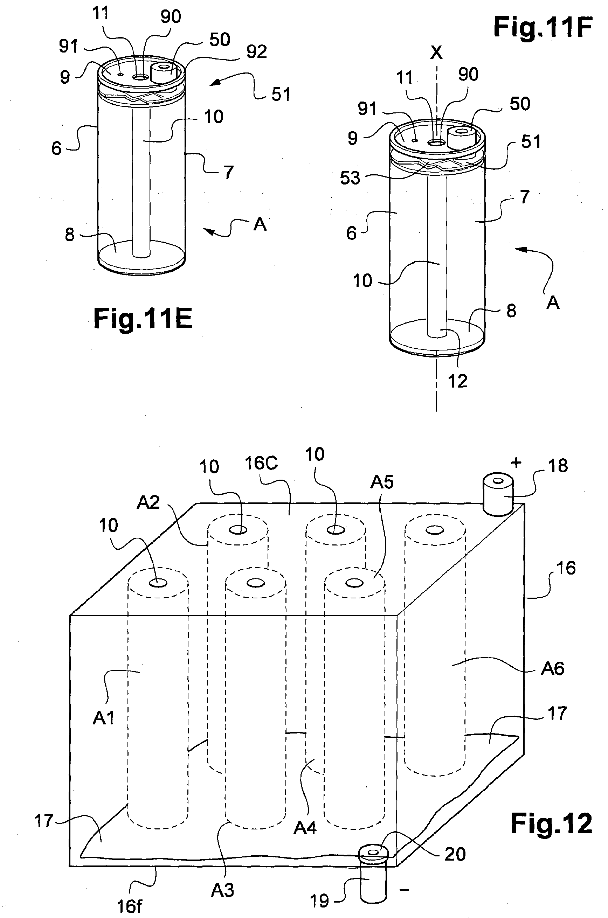

Etape g1/ : On soude alors le couvercle 9 au récipient rigide métallique 7. On veille au préalable de cette étape g1/ à mettre en place le couvercle 9 sur l'extrémité supérieure enveloppe latérale cylindrique 7 en emmanchant l'extrémité creuse 11 dans l'ouverture 90 du couvercle 9. Pour la soudure, on réalise une soudure circulaire sur le bord circulaire 92 du couvercle 9 (figure 11E).

Etape h1/ : On soude alors le noyau central creux 10 autour de l'ouverture centrale 90 du couvercle 9 dans laquelle il est emmanché. Pour ce faire, on réalise une soudure circulaire autour de l'extrémité creuse 11 emboitée dans l'ouverture centrale 90 du couvercle 9 (figure 11F).

Etape i1/ : Comme représenté en figures 13, 15A, 15B et 16, on visse alors le pôle positif creux 40 dans le filetage interne 14 du noyau central creux 10.

Puis on effectue une étape de remplissage sous vide du boitier 6 à l'aide d'un électrolyte liquide, au travers d'une autre ouverture débouchante non représentée qui est pratiquée dans le couvercle 9.

La réalisation de l'accumulateur Li-ion selon l'invention prend fin par le bouchage de l'ouverture de remplissage au moyen d'un rivet non représenté.

Grâce à la lame d'air permanent provenant de l'extérieur et introduite au coeur de la cellule C, un accumulateur selon l'invention, dont la réalisation vient d'être décrite, bénéficie d'une dissipation thermique permanente lors de son fonctionnement. La sécurité d'un accumulateur Li-ion selon l'invention est donc accrue comparativement aux accumulateurs Li-ion selon l'état de l'art.

Du fait de cette sécurité accrue, plusieurs accumulateurs selon l'invention, i.e. avec lame d'air permanente depuis l'extérieur du boitier 6, peuvent être assemblés entre eux pour former un nouvel agencement de batterie (pack-batterie).

On a représenté en figure 12 un pack-batterie avec plusieurs accumulateurs Li-ion A1, A2...A6 de forme cylindrique selon l'invention reliés en série ou en parallèle électrique entre eux et contenus dans une même boite métallique 16 formant un emballage commun.

Au fond de la boite métallique 16 est agencé un film 17 en matériau isolant électrique.

Les accumulateurs A1-A6 sont reliés entre eux à une borne positive 18 fixée, notamment par soudure, au couvercle 18S de la boite 16 et à une borne négative 19 formant une traversée au travers du fond 16f de la boite, par l'intermédiaire d'un joint 20 en matériau isolant électrique

Tel qu'illustré en figure 12, la forme de la boite métallique 16 est parallépipédique rectangle mais on pourrait prévoir d'autres formes.

Tel qu'illustré en figure 12, tous ces accumulateurs A1-A6 sont identiques entre eux. On pourrait prévoir de loger au sein d'une même boite métallique 16 des accumulateurs selon l'invention avec des caractéristiques électriques (capacité, densité d'énergie, tension..) différentes et/ou des dimensions différentes.

L'invention n'est pas limitée aux exemples qui viennent d'être décrits ; on peut notamment combiner entre elles des caractéristiques des exemples illustrés au sein de variantes non illustrées.

Ainsi, si dans les exemples illustrés, la borne (pôle) négative est celle qui forme une traversée du couvercle 9 et la borne positive est celle qui est reliée électriquement au boitier 6 conducteur électrique, on peut envisager l'inverse, en fonction de la chimie des matériaux des électrodes et leur agencement dans la cellule électrochimique.

En outre, si dans les exemples illustrés, le pôle positif ne formant pas une traversée est soudé à une partie du boitier 6, i.e. le couvercle 9, on peut envisager de le souder au fond 8, c'est-à-dire à une extrémité du boitier 6 opposée.

Si dans l'exemple du procédé de réalisation illustré, on a réalisé l'étape c1 de soudure du clinquant 51 avant l'introduction de la cellule enroulée autour du support 80 dans l'enveloppe latérale 7 et la soudure du fond 8 à cette dernière, on peut la réaliser après, c'est-à-dire introduire la cellule C enroulée autour du support 80 dans l'enveloppe latérale 7 puis souder le fond 8 à cette dernière et enfin souder le clinquant 51.

Si dans les exemples illustrés aux figures 5, 6A, 6B et 11A-11F, le boitier 6 et le noyau central creux 10 sont de forme cylindrique, l'accumulateur selon l'invention et toutes ses étapes de réalisation décrites peuvent être mis en oeuvre avec un boitier et un noyau central creux de forme prismatique.

Même si cela ne ressort pas des figures schématiques, on peut envisager des grands diamètres creux de noyau central 10 afin d'augmenter encore la dissipation thermique permanente au sein d'un accumulateur selon l'invention. Cela peut s'avérer important notamment pour des cellules électrochimiques, analysées comme étant à risque et/ou avec des échauffements significatifs. On veille bien entendu dans ce cas à trouver un bon compromis entre l'énergie de l'accumulateur et sa masse, compte tenu qu'un grand diamètre de noyau central creux induit une masse supplémentaire pour l'ensemble de l'accumulateur.

Par ailleurs, bien que décrite en référence à une batterie monopolaire, l'invention s'applique également à une batterie bipolaire. Ainsi, la demanderesse a déposé le 1^{er} Octobre 2012 une demande de brevet FR 12 59260 qui décrit et revendique une solution de bobinage de batteries bipolaires autour d'un noyau. Ainsi, l'invention peut s'appliquer avec un noyau central creux 10 utilisé comme noyau de bobinage (enroulement) d'une batterie bipolaire.

D'autres variantes et améliorations peuvent être apportées sans pour autant sortir du cadre de l'invention.

Si dans les modes de réalisation illustrés, la borne qui est vissée dans le filetage interne du noyau central creux est la borne positive, cela peut tout aussi bien être la borne négative.

Par ailleurs, si dans le mode de réalisation illustré aux figures 13 à 16, la borne vissée dans le filetage interne du noyau central creux est prévue pour être sur le dessous de l'accumulateur, elle peut tout aussi bien être sur le dessus.

## Revendications

1. Accumulateur électrochimique (A) au lithium comportant au moins une cellule électrochimique (C) constituée d'au moins une anode et une cathode de part et d'autre d'un électrolyte imprégné dans un séparateur, deux collecteurs de courant dont un est relié à l'anode et l'autre à la cathode, un boitier (6) de forme allongée selon un axe longitudinal (X), le boitier comportant un couvercle (9), un fond (8), une enveloppe latérale (7) assemblée à la fois au fond et au couvercle, et un noyau central (10) selon l'axe X, le noyau central étant creux au moins sur une partie de sa hauteur et réalisé en un matériau dont le point de fusion est supérieur à la température atteinte par la(les) cellule(s) en fonctionnement anormal, le boitier étant agencé pour contenir la(les) cellule(s) électrochimique(s) enroulée(s) autour du noyau central avec étanchéité tout en étant traversé par une partie des collecteurs de courant formant les pôles (40, 50), la partie creuse (11, 12) du noyau central (12) débouchant à l'extérieur du boitier par le fond et/ou le couvercle, le noyau central présentant à au moins une extrémité de sa partie creuse un filetage interne (14), caractérisé ce que un filetage externe d'une pièce (40) formant un pôle de l'accumulateur est vissé dans le filetage interne (14) du noyau central creux.

2. Accumulateur selon la revendication 1, le noyau central étant creux sur toute sa hauteur.

3. Accumulateur selon l'une des revendications précédentes, le noyau central étant en matériau métallique, tel que l'aluminium.

4. Accumulateur selon la revendication 3, le noyau central métallique étant revêtu d'un revêtement (15) en matériau isolant électrique, tel qu'un revêtement en polyoléfine.

5. Accumulateur l'une des revendications précédentes, le noyau central présentant une surface externe lisse.

6. Accumulateur selon l'une des revendications précédentes, le noyau central présentant à au moins une extrémité de sa partie creuse une forme interne (13) adaptée pour réaliser un ajustement serré avec le mandrin d'une machine à bobiner la(les) cellule(s) électrochimique(s).

7. Accumulateur selon la revendication 6 , le noyau central présentant à l'une de ses extrémités la forme interne adaptée pour l'ajustement serré et à l'autre de ses extrémités le filetage interne pour le vissage du pôle de l'accumulateur.

8. Accumulateur selon l'une des revendications précédentes, le noyau central étant soudé autour d'une ouverture débouchante du fond et/ou du couvercle.

9. Accumulateur selon l'une des revendications 1 à 7, le noyau central et le fond du boitier constituant une seule pièce emboutie.

10. Accumulateur selon l'une des revendications précédentes, comportant un ou plusieurs éléments passifs de refroidissements, tel(s) qu' une ou plusieurs ailettes à l'intérieur de la partie creuse du noyau central.

11. Accumulateur selon la revendication 10, le(s) élément(s) de refroidissement passif(s) étant agencé(s) de manière à être en contact avec la partie interne du tube formant le noyau central.

12. Batterie, dit pack-batterie, comportant une pluralité d'accumulateurs (A1, A2, ...A6) selon l'une revendications précédentes, une boite métallique (16) contenant la pluralité d'accumulateurs reliés en série ou en parallèle électrique entre eux, deux pôles dont le pôle négatif (19) commun aux accumulateurs formant une traversée d'une paroi (16f) de la boite et le pôle positif commun (18) aux accumulateurs fixé à une paroi (16s) de la boîte, et un film (17) en matériau isolant électrique entre au moins une extrémité des accumulateurs et une paroi (16f) de la boite.

13. Batterie selon la revendication 12, la pluralité d'accumulateurs étant agencée à la verticale dans la boite métallique, le pôle négatif commun formant la traversée à travers la paroi inférieure ou supérieure tandis que le pôle positif commun est fixé, notamment par soudure, à la paroi opposé, i.e. respectivement celle supérieure ou inférieure.

14. Procédé de réalisation d'un accumulateur (A) au lithium comportant au moins une cellule électrochimique (C) constituée d'au moins une anode et une cathode de part et d'autre d'un électrolyte imprégné dans un séparateur, et un boitier (6) agencé pour contenir la(les) cellule(s) électrochimique(s) avec étanchéité tout en étant traversé par une partie des collecteurs de courant formant les pôles, comportant les étapes consistant à:
a/ enrouler par bobinage l'anode, la cathode et le séparateur de la (des) cellule(s) électrochimique(s) autour d'un noyau central creux (10) sur au moins partie de sa hauteur; le noyau présentant à au moins une extrémité de sa partie creuse un filetage interne (14) et réalisé en un matériau dont le point de fusion est supérieur à la température atteinte par la(les) cellule(s) en fonctionnement anormal;
b/ souder à l'une des extrémités de la cellule enroulée, la partie de collecteur de courant supportant l'anode avec une partie de collecteur de courant terminal sous la forme d'un clinquant (51) ;
c/ introduire la cellule enroulée avec le clinquant dans un récipient rigide formant le fond et l'enveloppe latérale du boitier (6);
d/ souder à l'autre des extrémités de la cellule enroulée, la partie de collecteur de courant supportant la cathode avec le fond du boitier ;
e/ souder le clinquant à un pôle négatif (50) formant une traversée d'un couvercle (9) ;
f/ souder le couvercle au récipient rigide;
g/ souder le noyau central creux (10) autour d'une ouverture (90) du fond et/ou du couvercle dans laquelle il est emmanché ;
h/ visser le pôle positif (40) au filetage interne (14) du noyau central creux (10).

15. Procédé de réalisation d'un accumulateur (A) au lithium comportant au moins une cellule électrochimique (C) constituée d'au moins une anode et une cathode de part et d'autre d'un électrolyte imprégné dans un séparateur, et un boitier (6) agencé pour contenir la(les) cellule(s) électrochimique(s) avec étanchéité tout en étant traversé par une partie des collecteurs de courant formant les pôles (40, 50), comportant les étapes consistant à:
a1/ enrouler par bobinage l'anode, la cathode et le séparateur de la (des) cellule(s) électrochimique(s) autour d'un support (80) comportant un noyau central creux (10) sur au moins partie de sa hauteur et une plaque (8) formant le fond d'un boitier; le noyau présentant à au moins une extrémité de sa partie creuse un filetage interne (14) et réalisé en un matériau dont le point de fusion est supérieur à la température atteinte par la(les) cellule(s) en fonctionnement anormal;
b1/ souder à l'une des extrémités de la cellule enroulée, la partie de collecteur de courant supportant la cathode avec le fond (8, 81) du boitier,
c1/ souder à l'autre des extrémités de la cellule enroulée, la partie de collecteur de courant supportant l'anode avec une partie de collecteur de courant terminal sous la forme d'un clinquant (51) ;
d1/ introduire la cellule enroulée avec le clinquant dans un récipient rigide formant l'enveloppe latérale (7) du boitier,
e1/ souder le fond (8, 82) à l'enveloppe latérale (7) ;
f1/ souder le clinquant (51) à un pôle négatif (50) formant une traversée d'un couvercle (9) ;
g1/ souder le couvercle (9, 92) au récipient rigide (7) ;
h1/ le cas échéant, souder le noyau central creux (10) autour d'une ouverture (90) du couvercle (9) dans laquelle il est emmanché ;
i1/ visser le pôle positif (40) au filetage interne (14) du noyau central creux (10).

## Patentansprüche

1. Elektrochemischer Lithiumakkumulator (A) mit wenigstens einer elektrochemischen Zelle (C), die gebildet wird durch wenigstens eine Anode und eine Kathode beiderseits eines in einen Separator imprägnierten Elektrolyten, zwei Stromkollektoren, von denen einer mit der Anode und der andere mit der Kathode verbunden ist, einem Gehäuse mit einer entlang einer Längsachse (X) langgestreckten Form, wobei das Gehäuse einen Deckel (9), einen Boden (8) und eine seitliche Hülle (7) aufweist, die sowohl mit dem Boden als auch mit dem Deckel zusammengebaut ist und einen zentralen Kern (10) entlang der Achse X aufweist, wobei der zentrale Kern zumindest auf einem Teil seiner Höhe hohl ist und aus einem Material gebildet ist, dessen Schmelzpunkt höher liegt als die bei anormaler Funktion von der oder den Zellen erreichte Temperatur, wobei das Gehäuse dazu ausgebildet ist, die elektrochemische Zelle oder die elektrochemischen Zellen in einem dicht auf dem zentralen Kern aufgewickelten Zustand aufzunehmen, wobei es von einem Teil der Stromkollektoren durchquert wird, die Pole (40, 50) bilden, wobei der hohle Teil (11, 12) des zentralen Kerns (12) sich am Boden und/oder Deckel nach außerhalb des Gehäuses öffnet und der zentrale Kern an wenigstens einem Ende seines hohlen Teils ein Innengewinde (14) aufweist, **dadurch gekennzeichnet, dass** ein Außengewinde eines Teils (40), das einen Pol des Akkumulators bildet, in das Innengewinde des zentralen Kerns eingeschraubt ist.

2. Akkumulator nach Anspruch 1, bei dem der zentrale Kern auf seiner gesamten Höhe hohl ist.

3. Akkumulator nach einem der vorstehenden Ansprüche, bei dem der zentrale Kern aus Metall, etwa aus Aluminium gebildet ist.

4. Akkumulator nach Anspruch 3, bei dem der zentrale metallische Kern mit einer Bekleidung (15) aus elektrisch isolierendem Material bekleidet ist, etwa einer Bekleidung aus Polyolefin.

5. Akkumulator nach einem der vorstehenden Ansprüche, bei dem der zentrale Kern eine glatte Außenfläche aufweist.

6. Akkumulator nach einem der vorstehenden Ansprüche, bei dem der zentrale Kern an wenigstens einem Ende seines hohlen Teils eine innere Form (13) bildet, die dazu ausgebildet ist, einen Presssitz mit einem Dorn einer Maschine zum Aufwickeln der elektrochemischen Zelle oder der elektrochemischen Zellen zu bilden.

7. Akkumulator nach Anspruch 6, bei dem der zentrale Kern an einem seiner Enden die innere Form bildet, die zur Bildung des Presssitzes ausgebildet ist, und an seinem anderen Ende das Innengewinde für das Einschrauben des Pols des Akkumulators.

8. Akkumulator nach einem der vorstehenden Ansprüche, bei dem der zentrale Kern um eine Öffnung des Bodens und/oder des Deckels herum geschweißt oder gelötet ist.

9. Akkumulator nach einem der Ansprüche 1 bis 7, bei dem der zentrale Kern und der Boden des Gehäuses durch ein einstückiges Ziehteil gebildet werden.

10. Akkumulator nach einem der vorstehenden Ansprüche, mit einem oder mehreren passiven Kühlelementen wie etwa einer oder mehreren Kühlrippen im Inneren des hohlen Teils des zentralen Kerns.

11. Akkumulator nach Anspruch 10, bei dem das passive Kühlelement oder die passiven Kühlelemente so ausgebildet sind, dass sie mit dem inneren Teil des Rohres in Kontakt stehen, das den zentralen Kern bildet.

12. Batterie, als Batteriepack bezeichnet, mit mehreren Akkumulatoren (A1, A2, ...., A6) gemäß einem der vorstehenden Ansprüche, einem Kasten (16) aus Metall, der die mehreren elektrisch in Reihe oder parallel miteinander verbundenen Akkumulatoren enthält, zwei Polen, von denen der negative Pol (19), der den Akkumulatoren gemeinsam ist, eine Durchführung durch eine Wand (16f) des Kastens bildet und der den Akkumulatoren gemeinsame positive Pol (18) an einer Wand (16s) des Kastens befestigt ist, und einem Film (17) aus elektrisch isolierendem Material zwischen zumindest einem Ende der Akkumulatoren und einer Wand (16f) des Kastens.

13. Batterie nach Anspruch 12, bei der die mehreren Akkumulatoren vertikal in dem metallischen Kasten angeordnet sind, wobei der gemeinsame negative Pol eine Durchführung durch die untere oder obere Wand bildet, während der gemeinsame positive Pol an der entgegengesetzten Wand, also der oberen bzw. unteren Wand des Kastens befestigt ist, insbesondere durch Lötung oder Schweißung.

14. Verfahren zur Herstellung eines Lithiumakkumulators (A) mit wenigstens einer elektrochemischen Zelle (C), die gebildet wird durch wenigstens eine Anode und eine Kathode beiderseits eines in einem Separator imprägnierten Elektrolyten, einem Gehäuse (6), das dazu ausgebildet ist, die elektrochemische Zelle oder die elektrochemischen Zellen dicht aufzunehmen und dabei von einem Teil der die Pole bildenden Stromkollektoren durchquert wird, mit den folgenden Schritten:
a/ Aufwickeln der Anode, der Kathode und des Separators der elektrochemischen Zelle oder der elektrochemischen Zellen durch Spulenwicklung auf einen zentralen Kern (10) auf wenigstens einem Teil seiner Höhe, wobei der Kern an wenigstens einem Ende seines hohlen Teils ein Innengewinde (14) bildet und aus einem Material hergestellt ist, dessen Schmelzpunkt höher liegt als die Temperatur, die bei anormaler Funktion von der elektrochemischen Zelle oder den elektrochemischen Zellen erreicht wird;
b/ Anlöten oder Anschweißen, an eines der Enden der aufgewickelten Zelle, des Teils des Stromkollektors, der die Anode mit einem Endstück des Stromkollektors in der Form einer Schelle (51) abstützt,
c/ Einführen der aufgewickelten Zelle mit der Schelle in ein starres Behältnis, das den Boden und die seitliche Hülle des Gehäuses (6) bildet,
d/ Anlöten oder Anschweißen, an das andere Ende der aufgewickelten Zelle, des Teils des Stromkollektors, der die Kathode mit dem Boden des Gehäuses abstützt,
e/ Anlöten oder Anschweißen der Schelle an einen negativen Pol (50), der eine Durchführung eines Deckels (9) bildet,
f/ Anlöten oder Anschweißen des Deckels an das starre Behältnis,
g/ Anlöten oder Anschweißen des hohlen zentralen Kerns (10) um eine Öffnung (90) des Bodens und/oder des Deckels herum, in die er eingepasst ist,
h/ Einschrauben des positiven Pols (40) in das Innengewinde (14) des hohlen zentralen Kerns (10).

15. Verfahren zur Herstellung eines Lithiumakkumulators (A) mit wenigstens einer elektrochemischen Zelle (C), die gebildet wird durch wenigstens eine Anode und eine Kathode beiderseits eines in einem Separator imprägnierten Elektrolyten, einem Gehäuse (6), das dazu ausgebildet ist, die elektrochemische Zelle oder die elektrochemischen Zellen dicht aufzunehmen und dabei von einem Teil der die Pole bildenden Stromkollektoren durchquert wird, mit den folgenden Schritten:
a1/ Aufwickeln der Anode, der Kathode und des Separators der elektrochemischen Zelle oder der elektrochemischen Zellen durch Spulenwicklung auf einen zentralen Kern (10) auf wenigstens einem Teil seiner Höhe, wobei der Kern an wenigstens einem Ende seines hohlen Teils ein Innengewinde (14) bildet und aus einem Material hergestellt ist, dessen Schmelzpunkt höher liegt als die Temperatur, die bei anormaler Funktion von der elektrochemischen Zelle oder den elektrochemischen Zellen erreicht wird;
b1/ Anlöten oder Anschweißen, an eines der Enden der aufgewickelten Zelle, des Teils des Stromkollektors, der die Kathode mit dem Boden (8, 81) des Gehäuses abstützt,
c1/ Anlöten oder Anschweißen, an das andere Ende der aufgewickelten Zelle, des Teils des Stromkollektors, der die Anode mit einem Endstück des Stromkollektors in der Form einer Schelle (51) abstützt,
d1/ Einführen der aufgewickelten Zelle mit der Schelle in ein starres Behältnis, das die seitliche Hülle des Gehäuses (6) bildet,
e1/ Anlöten oder Anschweißen des Bodens (8, 82) an die seitliche Hülle (7),
f1/ Anlöten oder Anschweißen der Schelle (51) an einen negativen Pol (50), der eine Durchführung eines Deckels (9) bildet,
g1/ Anlöten oder Anschweißen des Deckels (9, 92) an das starre Behältnis (7),
h1/ gegebenenfalls Anlöten oder Anschweißen des hohlen zentralen Kerns (10) um eine Öffnung (90) des Deckels (9) herum, in die er eingepasst ist,
i1/ Einschrauben des positiven Pols (40) in das Innengewinde (14) des hohlen zentralen Kerns (10).

## Claims

1. A lithium electrochemical (A) accumulator comprising at least one electrochemical cell (C) made up of at least one anode and one cathode on either side of an electrolyte impregnated in a separator, two current collectors one of which is connected to the anode and the other to the cathode, a casing (6) of a shape that is elongate along a longitudinal axis (X), the casing comprising a cover (9), a bottom (8) and a lateral jacket (7) that is joined both to the bottom and to the cover, and a central core (10) along the axis X, the central core being hollow at least over a portion of its height and made of a material the melting point of which is above the temperature reached by the cell(s) in abnormal operation, the casing being arranged to sealably contain the electrochemical cell(s) wound around the central core while also being passed through by a portion of the current collectors forming the poles (40, 50), the hollow portion (11, 12) of the central core (12) opening onto the exterior of the casing via the bottom and/or cover, the central core having, at at least one end of its hollow portion, an internal thread (14) **characterized in that** an external thread of a part (40) forming one pole of the accumulator is screwed in the internal thread (14) of the hollow central core.

2. The accumulator as claimed in claim 1, the central core being hollow over its entire height.

3. The accumulator as claimed in one of the preceding claims, the central core being made of a metal, such as aluminum.

4. The accumulator as claimed in claim 3, the metal central core being coated with a coating (15) made of an electrical insulator, such as a coating made of polyolefin.

5. The accumulator as claimed in one of the preceding claims, the central core having a smooth external surface.

6. The accumulator as claimed in one of the preceding claims, the central core having at at least one end of its hollow portion an internal shape (13) suitable for making a tight fit with the mandrel of a machine for spooling the electrochemical cell(s).

7. The accumulator as claimed in claim 6, the central core having at one of its ends the internal shape suitable for the tight fit and at the other of its ends the internal thread for screwing the pole of the accumulator.

8. The accumulator as claimed in one of the preceding claims, the central core being welded around a through-aperture in the bottom and/or cover.

9. The accumulator as claimed in one of claims 1 to 7, the central core and the bottom of the casing consisting of a single deep-drawn part.

10. The accumulator as claimed in one of the preceding claims, comprising one or more passive cooling elements, such as one or more fins in the interior of the hollow portion of the central core.

11. The accumulator as claimed in claim 10, the passive cooling element(s) being arranged so as to make contact with the internal portion of the tube forming the central core.

12. A battery pack comprising a plurality of accumulators (A1, A2, ..A6) as claimed in one of the preceding claims, a metal box (16) containing the plurality of accumulators electrically connected in series or in parallel to one another, two poles, namely a negative pole (19) that is common to the accumulators and that forms a feedthrough through a wall (16f) of the box and a positive pole (18) that is common to the accumulators and fastened to one wall (16s) of the box, and a film (17) made of an electrical insulator between at least one end of the accumulators and one wall (16f) of the box.

13. The battery as claimed in claim 12, the plurality of accumulators being arranged vertically in the metal box, the negative common pole forming the feedthrough through the lower or upper wall whereas the positive common pole is fastened, especially by welding, to the opposite wall, i.e. to the upper or lower wall, respectively.

14. A process for producing a lithium accumulator (A) comprising at least one electrochemical cell (C) made up of at least one anode and one cathode on either side of an electrolyte impregnated in a separator, and a casing (6) arranged to sealably contain the electrochemical cell(s) while also being passed through by a portion of the current collectors forming the poles (40, 50), comprising steps consisting in:
a/ winding by spooling the anode, the cathode and the separator of the electrochemical cell(s) about a central core (10) that is hollow over at least a portion of its height; the core having at at least one end of its hollow portion an internal thread;
b/ welding, at one of the ends of the wound cell, the current collector portion bearing the anode to a terminal current collector portion taking the form of a shim (51);
c/ inserting the wound cell with the shim into a rigid container forming the bottom and lateral jacket of a casing;
d/ welding, at the other of the ends of the wound cell, the current collector portion bearing the cathode to the bottom of the casing (6);
e/ welding the shim to a negative pole (50) forming a feedthrough (90) through a cover (9);
f/ welding the cover to the rigid container;
g/ welding the hollow central core (10) around an aperture (90) in the bottom and/or cover and into which it fitted; and
h/ screwing the positive pole (40) into the internal thread (14) of the hollow central core (10).

15. A process for producing a lithium accumulator (A) comprising at least one electrochemical cell (C) made up of at least one anode and one cathode on either side of the electrolyte impregnated in a separator, and a casing (6) arranged to sealably contain the electrochemical cell(s) while also being passed through by a portion of the current collectors forming the poles (40, 50), comprising steps consisting in:
a1/ winding by spooling the anode, the cathode and the separator of the electrochemical cell(s) about a carrier (80) comprising a central core (10) that is hollow over at least a portion of its height and a plate (8) forming the bottom of a casing; the core having at at least one end of its hollow portion an internal thread;
b1/ welding, at one of the ends of the wound cell, the current collector portion bearing the cathode to the bottom (8, 81) of the casing;
c1/ welding, at the other of the ends of the wound cell, the current collector portion bearing the anode to a terminal current collector portion taking the form of a shim (51);
d1/ inserting the wound cell with the shim into a rigid container forming the lateral jacket (7) of the casing;
e1/ welding the bottom (8, 82) to the lateral jacket (7);
f1/ welding the shim (51) to a negative pole (50) forming a feedthrough through a cover (9);
g1/ welding the cover (9, 92) to the rigid container (7);
h1/ if need be, welding the hollow central core (10) around an aperture (90) in the cover (9) into which it is fitted; and
i1/ screwing the positive pole (40) into the internal thread (14) of the hollow central core (10).
